# EUROPEAN PATENT APPLICATION

(11) **EP 2 910 328 A1**
(43) Date of publication of application: **26.08.2015**
(21) Application number: 13843472.5
(22) Date of filing: 30.09.2013
(51) Int. Cl.: B23K 9/167

(54) **NON-CONSUMABLE ELECTRODE WELDING SYSTEM AND WELDING METHOD THEREOF**

(30) Priority: 04.10.2012 KR 20120110125
(71) Applicant: Oh, Sung Gu, Gimpo-si, Gyeonggi-do 415-852 (KR)
(72) Inventor: Oh, Sung Gu, Gimpo-si, Gyeonggi-do 415-852 (KR)
(74) Representative: Mittler, Enrico
(86) International application number: PCT/KR2013/008730
(87) International publication number: WO 2014/054873

(57) **Abstract**

A non-consumable electrode welding system and a welding method thereof are disclosed. The non-consumable electrode welding method of the present invention includes a step of applying (+) or (-) polarity to a welding wire as a basic material and a filter metal and applying, to a non-consumable electrode rod, the polarity opposite to the polarity of the welding wire. (Fig. 1).

## Description

### TECHNICAL FIELD

The present invention relates to a non-consumable electrode welding system and a welding method thereof, and more particularly to a non-consumable electrode welding system and a welding method thereof which perform welding by applying polarity to a basic material, a welding wire as a filter metal, and a non-consumable electrode rod respectively.

### BACKGROUND ART

In general, a non-consumable electrode welding is divided into TIG welding and plasma welding.

Regarding the non-consumable electrode welding, an electrode is applied to a tungsten electrode rod and a basic material. Here, an arc occurs between the tungsten electrode rod and the basic material, and an inert gas is supplied to the arc. The inert gas is ionized by a high temperature, and thus, maintains a state where a welding current flows well and forms a high temperature plasma state between the basic material and the inert gas. As a result, heat for welding is supplied to the basic material.

The basic material is melted by the heat and a filter metal is molten and added to a welding pool, so that the welding is performed. Here, the inert gas blocks external air such that a welding zone is not oxidized or nitrified, thereby protecting the welding zone from the outside and a welding core part and protecting the welding zone from defects.

Also, the non-consumable electrode welding method uses direct current and alternating current.

The direct current welding includes a direct current straight polarity in which a positive (+) electrode is applied to the basic material and a negative (-) electrode is applied to the electrode rod, and a direct current reverse polarity in which a negative (-) electrode is applied to the basic material and a positive (+) electrode is applied to the electrode rod.

Here, in the direct current straight polarity, the basic material is deeply melted and the heat is concentrated on the basic material. In the direct current reverse polarity, the basic material is shallowly melted and the heat is concentrated on the electrode rod.

An oxide layer is formed on the surface of the aluminum alloy or magnesium alloy and interferes with the welding. Therefore, the alternating current welding is used to solve the problem.

Here, the welding has an electrically and magnetically unstable environment. A positive (+) ion generated from the gas and a negative (-) ion generated from the current flow during the welding may instantaneously generate a high voltage by the variation of the current at the start of or during the welding. The high voltage forms an instantaneous current route by the ion excited by the welding environment, and the current flows in an irregular direction.

The instantaneous current may flow through the welding wire or may flow to the air. Due to the characteristics of the instantaneous high voltage, the instantaneous current includes inability to other physical insulations and spatial insulations.

The instantaneous current flow affects all of the devices applied to the welding process, and, particularly, has a fatal influence on the electric and electronic devices.

Also, when not only TIG welding and plasma welding but also a welding which uses the direct current straight polarity and alternating current polarity is automated, the instantaneous current flow produces a more fatal result, and thus, is regarded as a crucial obstacle to the automation.

Meanwhile, a consumable electrode welding is performed by the arc due to the contact of two electrodes. Regarding the welding arc (contact arc), two currents are consumed by the occurrence of the arc, so that the electrical and magnetic influences caused by the non-consumable electrode welding are small enough to ignore the influence on the automation equipment. Therefore, it is not difficult to automate the consumable electrode welding, and thus, the consumable electrode welding is now widely used.

### DISCLOSURE

### Technical Problem

The present invention is designed to consider the above problems. The object of the present invention is to provide a non-consumable electrode welding system and a welding method thereof capable of stably performing the welding and of improving productivity by protecting the welding device from the electrical and magnetic noises and impacts, and capable of promoting the automation of the welding device.

### Technical Solution

An object of the embodiment of the present invention is to a non-consumable electrode welding system including: a non-consumable electrode rod which is disposed adjacent to a basic material to be welded; a welding wire feeder which supplies a welding wire, i.e., a filter metal to an arc generation area formed between the basic material and the non-consumable electrode rod; a welding apparatus which supplies electric power to the basic material and the non-consumable electrode rod; a branch line which is branched off from a wire connecting the welding apparatus with the basic material and is connected to the welding wire; and a ground which grounds the welding wire. A positive (+) polarity or negative (-) polarity is applied to the basic material and the welding wire, and a polarity opposite to those of the basic material and the welding wire is applied to the non-consumable electrode rod.

The object of the embodiment of the present invention is to a non-consumable electrode welding system including: a non-consumable electrode rod which is disposed adjacent to a basic material to be welded; a welding wire feeder which supplies a welding wire, i.e., a filter metal to an arc generation area formed between the basic material and the non-consumable electrode rod; a welding apparatus which supplies electric power to the basic material and the non-consumable electrode rod; and a branch line which is branched off from a wire connecting the welding apparatus with the basic material and is connected to the welding wire. A positive (+) polarity or negative (-) polarity is applied to the basic material and the welding wire, and a polarity opposite to those of the basic material and the welding wire is applied to the non-consumable electrode rod.

The object of the embodiment of the present invention is to a non-consumable electrode welding system including: a non-consumable electrode rod which is disposed adjacent to a basic material to be welded; a welding wire feeder which supplies a welding wire, i.e., a filter metal to an arc generation area formed between the basic material and the non-consumable electrode rod; and a ground which grounds the welding wire. A positive (+) polarity or negative (-) polarity is applied to the basic material, and a polarity opposite to that of the basic material is applied to the non-consumable electrode rod.

The non-consumable electrode rod contains a tungsten material.

Another object of the embodiment of the present invention is to a non-consumable electrode welding method including: applying a positive (+) polarity or negative (-) polarity to a basic material and a welding wire, i.e., a filter metal; applying a polarity opposite to those of the basic material and the welding wire to a non-consumable electrode rod; and grounding the welding wire.

The object of the embodiment of the present invention is to a non-consumable electrode welding method including: applying a positive (+) polarity or negative (-) polarity to a basic material and a welding wire, i.e., a filter metal; and applying a polarity opposite to those of the basic material and the welding wire to a non-consumable electrode rod.

The object of the embodiment of the present invention is to a non-consumable electrode welding method including: applying a positive (+) polarity or negative (-) polarity to a basic material; applying a polarity opposite to that of the basic material to a non-consumable electrode rod; and grounding a welding wire, i.e., a filter metal.

The non-consumable electrode rod contains a tungsten material.

### Advantageous Effects

According to the present invention, it is possible to stably perform the welding and to improve productivity by protecting the welding device from the electrical and magnetic noises and impacts. Also, the automation of the welding device can be promoted.

### DESCRIPTION OF DRAWINGS

Fig. 1 is a schematic view of a non-consumable electrode welding system according to a first embodiment of the present invention;
Figs. 2 and 3 are mimetic diagrams of a welding method which uses the non-consumable electrode welding system according to the first embodiment of the present invention;
Fig. 4 is a schematic view of a non-consumable electrode welding system according to a second embodiment of the present invention;
Figs. 5 and 6 are mimetic diagrams of a welding method which uses the non-consumable electrode welding system according to the second embodiment of the present invention;
Fig. 7 is a schematic view of a non-consumable electrode welding system according to a third embodiment of the present invention;
Figs. 8 and 9 are mimetic diagrams of a welding method which uses the non-consumable electrode welding system according to the third embodiment of the present invention.

### MODE FOR INVENTION

Hereafter, a preferable embodiment of the present invention will be described with reference to the accompanying drawings.

Prior to the description, in various embodiments, components with the same configuration will be representatively described in the first embodiment by using the same reference numerals. The other embodiments will describe only the differences from the first embodiment.

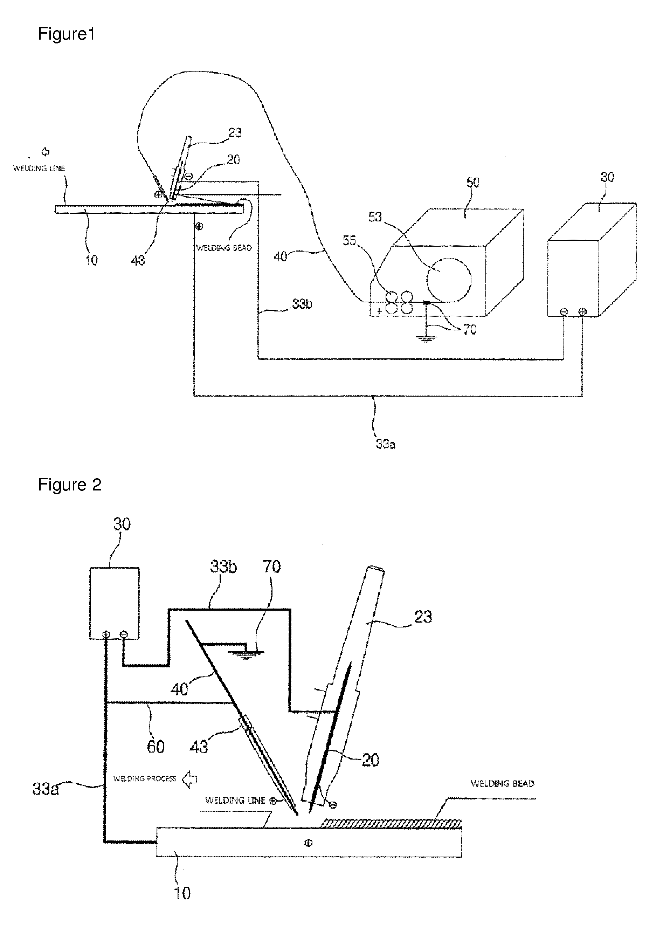

Fig. 1 is a schematic view of a non-consumable electrode welding system according to the first embodiment of the present invention.

In the non-consumable electrode welding system according to the first embodiment of the present invention, a gap is formed between a non-consumable electrode rod 20 and a basic material 10 to be welded and the non-consumable electrode rod 20 is disposed adjacent to the basic material 10. The non-consumable electrode rod 20 is held by an electrode rod holder 23. It is preferable that the non-consumable electrode rod 20 contains a tungsten material.

The basic material 10 and the non-consumable electrode rod 20 are connected to a welding apparatus 30 by electric wires 33a and 33b respectively. The welding apparatus 30 supplies electric power to the basic material 10, the non-consumable electrode rod 20 and a welding wire 40 to be described below. A current generated by the welding apparatus 30 circulates through the basic material 10, the non-consumable electrode rod 20 and the welding wire 40 and generates an arc across the gap between the basic material 10 and the non-consumable electrode rod 20.

The welding wire 40, i.e., a filter metal is supplied to an arc generation area between the basic material 10 and the non-consumable electrode rod 20 by a welding wire feeder 50.

The welding wire feeder 50 feeds the welding wire 40 between the basic material 10 and the non-consumable electrode rod 20, and particularly, feeds the welding wire 40 with the maintenance of a speed suitable for the welding process speed.

The welding wire feeder 50 includes a welding wire bobbin 53 and a plurality of rollers 55 therein. The welding wire 40 is wound around the welding wire bobbin 53. The roller 55 is rotated by the driving of a motor (not shown) and feeds the welding wire 40 wound off from the welding wire bobbin 53 to a welding wire guide tip.

Meanwhile, the non-consumable electrode welding system according to the first embodiment of the present invention includes a branch line 60 which is branched off from the wire 33a connecting the welding apparatus 30 with the basic material 10 and is connected to the welding wire 40. The welding wire 40 slides and is connected to the branch line 60, and is supplied to the arc generation area between the basic material 10 and the non-consumable electrode rod 20 by the welding wire feeder 50. Here, the basic material 10 and the welding wire 40 have the same polarity opposite to the polarity of the non-consumable electrode rod 20.

Also, the non-consumable electrode welding system according to the first embodiment of the present invention further includes a ground 70 which grounds the welding wire 40. The ground 70 is grounded to the ground. The welding wire 40 slides and is connected to the ground 70. Here, when a current flows to the welding wire feeder 50 from the arc generation area, the current flows smoothly to the ground through the ground 70 via the welding wire 40.

Here, the undescribed reference numeral 43 corresponds to the welding wire guide tip.

Depending on the configuration mentioned above, a welding method which uses the non-consumable electrode welding system according to the first embodiment of the present invention will be described as follows.

First, as shown in Fig. 2, a method for welding by applying a straight polarity will be described.

When a positive (+) polarity is applied to the basic material 10 and the welding wire 40 and a negative (-) polarity is applied to the non-consumable electrode rod 20, a welding current generated by the welding apparatus 30 circulates through the non-consumable electrode rod 20 from the basic material 10 and the welding wire 40 and generates an arc across the gap between the basic material 10 and the non-consumable electrode rod 20.

Here, inert gas is supplied to the arc generation area. The inert gas is ionized by a high temperature, and thus, maintains a state where the welding current flows well and forms a high temperature plasma state between the basic material 10 and the inert gas. As a result, the basic material 10 is melted. Here, in the non-consumable electrode welding method according to the present invention, the positive (+) polarity which is the same as that of the basic material 10 is applied to the welding wire 40, so that the plasma state is more activated and the basic material 10 can be melted at a high temperature.

The welding is performed by supplying the welding wire 40 to a welding pool of the basic material 10. Here, the inert gas blocks external air such that a welding zone is not oxidized or nitrified, thereby protecting the welding zone from the outside and a welding core part and protecting the welding zone from defects. Further, only the welding wire can be melted.

In the meantime, during the welding process, when the gap between the basic material 10 and the non-consumable electrode is increased and then the arc flow is broken, the current which is not extinguished between the basic material 10 and the non-consumable electrode flows to the welding wire feeder 50 through the welding wire 40, and an abnormal current flowing to the welding wire feeder 50 flows smoothly to the ground through the ground 70. Here, the abnormal current flowing backward to the welding wire feeder 50 flows smoothly to the ground through the ground 70, and thus, does not have electrical and magnetic influences on a roller driving motor and control devices of the welding wire feeder 50 and the control devices of the welding apparatus 30, etc.

Accordingly, it is possible to stably perform the welding and to improve productivity by protecting the welding device from the electrical and magnetic noises and impacts. Also, the automation of the welding device can be promoted.

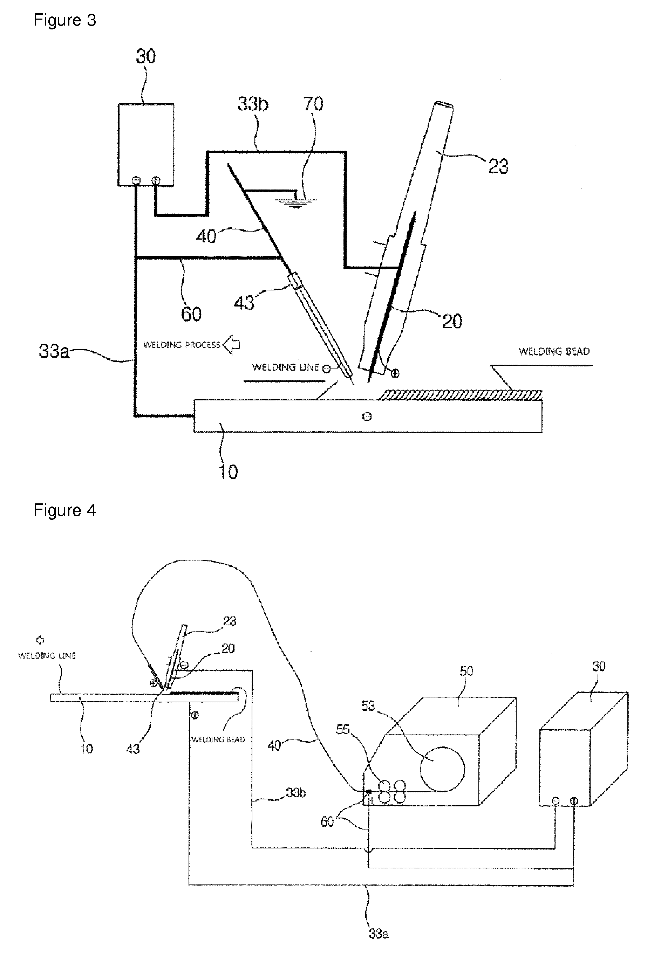

Meanwhile, Fig. 3 shows a method for welding by applying a negative (-) polarity to the basic material 10 and the welding wire 40 and by applying a positive (+) polarity to the non-consumable electrode rod 20 in the non-consumable electrode welding system according to the first embodiment of the present invention, that is to say, a method for welding by applying a reverse polarity.

Fig. 4 is a schematic view of a non-consumable electrode welding system according to a second embodiment of the present invention.

The non-consumable electrode welding system according to the second embodiment of the present invention includes the branch line 60 which is branched off from the wire 33a connecting the welding apparatus 30 with the basic material 10 and is connected to the welding wire 40. However, unlike the foregoing first embodiment, the non-consumable electrode welding system according to the second embodiment does not include the ground 70 which grounds the welding wire 40.

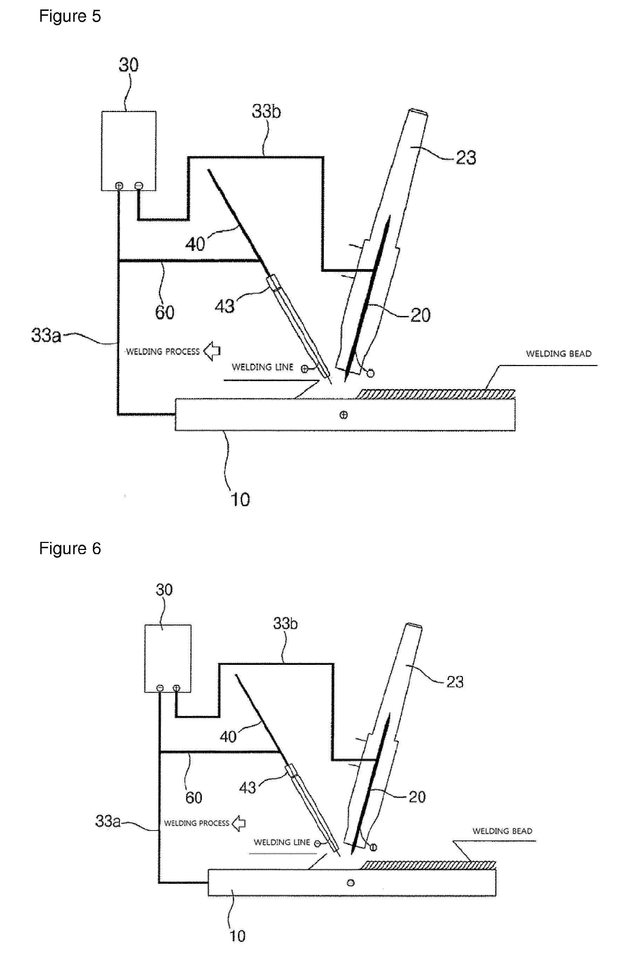

Fig. 5 shows a method for welding by applying a positive (+) polarity to the basic material 10 and the welding wire 40 and by applying a negative (-) polarity to the non-consumable electrode rod 20 in the non-consumable electrode welding system according to the second embodiment of the present invention, that is to say, a method for welding by applying a straight polarity.

Fig. 6 shows a method for welding by applying a negative (-) polarity to the basic material 10 and the welding wire 40 and by applying a positive (+) polarity to the non-consumable electrode rod 20 in the non-consumable electrode welding system according to the second embodiment of the present invention, that is to say, a method for welding by applying a reverse polarity.

As such, the object of the present invention can be accomplished by applying a positive (+) polarity or negative (-) polarity to the basic material 10 and the welding wire 40 and by applying a polarity opposite to that of the basic material 10 to the non-consumable electrode rod 20.

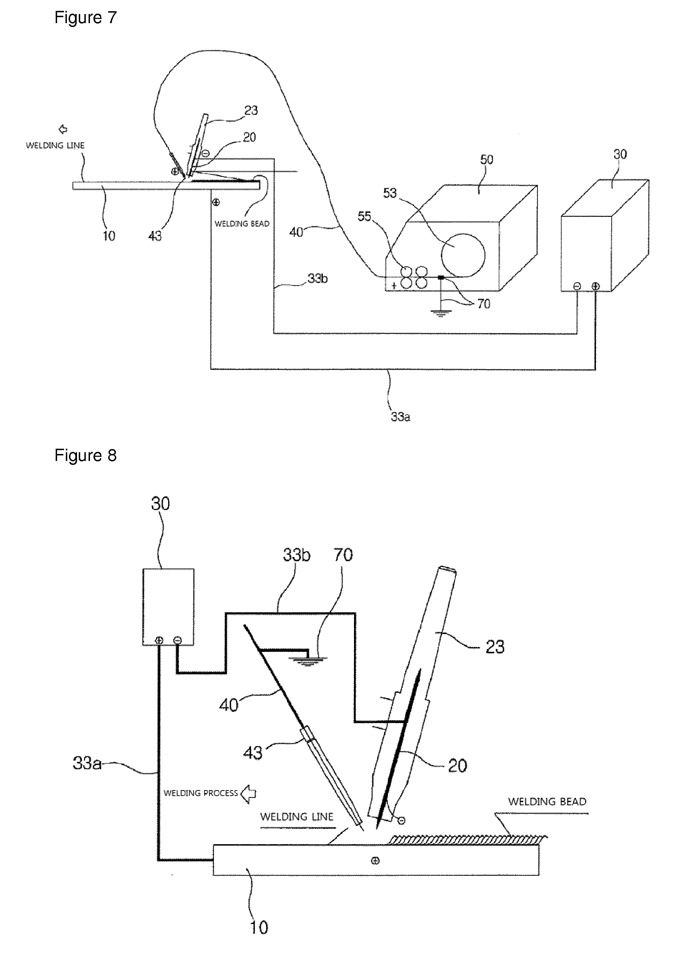

Fig. 7 is a schematic view of a non-consumable electrode welding system according to a third embodiment of the present invention.

The non-consumable electrode welding system according to the third embodiment of the present invention includes the ground 70 which grounds the welding wire 40. However, unlike the foregoing first embodiment, the non-consumable electrode welding system according to the third embodiment does not include the branch line 60 which is branched off from the wire 33a connecting the welding apparatus 30 with the basic material 10 and is connected to the welding wire 40.

Fig. 8 shows a method for welding by applying a positive (+) polarity to the basic material 10 and by applying a negative (-) polarity to the non-consumable electrode rod 20 in the non-consumable electrode welding system according to the third embodiment of the present invention, that is to say, a method for welding by applying a straight polarity.

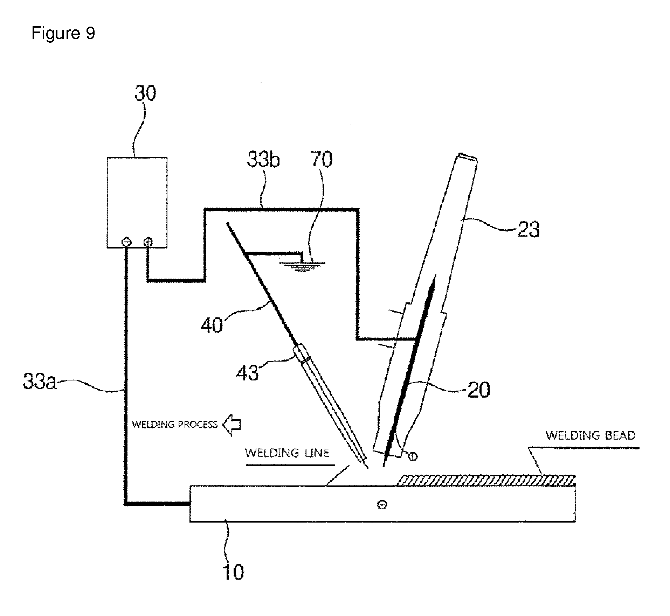

Fig. 9 shows a method for welding by applying a negative (-) polarity to the basic material 10 and the welding wire 40 and by applying a positive (+) polarity to the non-consumable electrode rod 20 in the non-consumable electrode welding system according to the third embodiment of the present invention, that is to say, a method for welding by applying a reverse polarity.

As such, a positive (+) polarity or negative (-) polarity is applied to the basic material 10 and a polarity opposite to that of the basic material 10 is applied to the non-consumable electrode rod 20, and the welding wire 40, i.e., a filter metal is grounded. As a result, even though the gap between the basic material 10 and the non-consumable electrode is increased and then the arc flow is broken during the welding process, the current which flows backward to the welding wire 40 without being extinguished between the basic material 10 and the non-consumable electrode does not affect the roller driving motor and peripheral control devices, etc., of the welding wire feeder 50 and flows smoothly to the ground through the ground connected to the welding wire 40.

As such, the present invention is not limited to the described embodiment and it is apparent to those skilled in the art that various changes and modification in forms and details may be made without departing from the spirit and scope of the present invention. Therefore, modifications or changes belong to the claims of the present invention.

## Claims

1. A non-consumable electrode welding system comprising:
a non-consumable electrode rod which is disposed adjacent to a basic material to be welded;
a welding wire feeder which supplies a welding wire, i.e., a filter metal to an arc generation area formed between the basic material and the non-consumable electrode rod;
a welding apparatus which supplies electric power to the basic material and the non-consumable electrode rod;
a branch line which is branched off from a wire connecting the welding apparatus with the basic material and is connected to the welding wire; and
a ground which grounds the welding wire,
wherein a positive (+) polarity or negative (-) polarity is applied to the basic material and the welding wire, and a polarity opposite to those of the basic material and the welding wire is applied to the non-consumable electrode rod.

2. A non-consumable electrode welding system comprising:
a non-consumable electrode rod which is disposed adjacent to a basic material to be welded;
a welding wire feeder which supplies a welding wire, i.e., a filter metal to an arc generation area formed between the basic material and the non-consumable electrode rod;
a welding apparatus which supplies electric power to the basic material and the non-consumable electrode rod; and
a branch line which is branched off from a wire connecting the welding apparatus with the basic material and is connected to the welding wire,
wherein a positive (+) polarity or negative (-) polarity is applied to the basic material and the welding wire, and a polarity opposite to those of the basic material and the welding wire is applied to the non-consumable electrode rod.

3. A non-consumable electrode welding system comprising:
a non-consumable electrode rod which is disposed adjacent to a basic material to be welded;
a welding wire feeder which supplies a welding wire, i.e., a filter metal to an arc generation area formed between the basic material and the non-consumable electrode rod; and
a ground which grounds the welding wire,
wherein a positive (+) polarity or negative (-) polarity is applied to the basic material, and a polarity opposite to that of the basic material is applied to the non-consumable electrode rod.

4. The non-consumable electrode welding system of claim 1, wherein the non-consumable electrode rod contains a tungsten material.

5. A non-consumable electrode welding method comprising:
applying a positive (+) polarity or negative (-) polarity to a basic material and a welding wire, i.e., a filter metal;
applying a polarity opposite to those of the basic material and the welding wire to a non-consumable electrode rod; and
grounding the welding wire.

6. A non-consumable electrode welding method comprising:
applying a positive (+) polarity or negative (-) polarity to a basic material and a welding wire, i.e., a filter metal; and
applying a polarity opposite to those of the basic material and the welding wire to a non-consumable electrode rod.

7. A non-consumable electrode welding method comprising:
applying a positive (+) polarity or negative (-) polarity to a basic material;
applying a polarity opposite to that of the basic material to a non-consumable electrode rod; and
grounding a welding wire, i.e., a filter metal.

8. The non-consumable electrode welding method of claim 5, wherein the non-consumable electrode rod contains a tungsten material.
